# FASCICULE DE BREVET EUROPEEN

(11) **EP 3 643 044 B1**
(45) Date de publication et mention de la délivrance du brevet: **24.03.2021**
(21) Numéro de dépôt: 18737952.4
(22) Date de dépôt: 18.06.2018
(51) Int. Cl.: H04L 29/08

(54) **PROCÉDÉ D'ACTIVATION DE TRAITEMENTS APPLIQUÉS À UNE SESSION DE DONNÉES**
VERFAHREN ZUR AKTIVIERUNG VON AUF EINE DATENSITZUNG ANGEWANDTEN PROZESSEN
METHOD OF ACTIVATING PROCESSES APPLIED TO A DATA SESSION

(30) Priorité: 21.06.2017 FR 1755654
(43) Date de publication de la demande: 29.04.2020
(73) Titulaire: ORANGE, 75015 Paris (FR)
(72) Inventeur: FIEAU, Frédèric, 92326 Châtillon cedex (FR); FROMENTOUX, Ga l, 92326 Ch tillon cedex (FR); BRAUD, Arnaud, 92326 Ch tillon cedex (FR)
(86) Numéro de dépôt international: PCT/FR2018/051452
(87) Numéro de publication internationale: WO 2018/234675

(56) Documents cités:
- WO-A1-2016/173635

## Description

### 1. Domaine de l'invention

L'invention se situe dans le domaine des sessions de données établies au sein d'infrastructures de communications. Elle traite des techniques de gestion de traitements appliqués aux sessions de données transportées dans les infrastructures de communications.

### 2. Etat de la technique antérieure

Les protocoles utilisés par un terminal pour communiquer sur les réseaux IP (en anglais *Internet Protocol*) se sont beaucoup diversifiés ces dernières années après une période où peu d'évolutions étaient à noter. La pile de protocoles, correspondant aux différents protocoles de communication utilisés à chaque couche (physique, liaison, réseau, transport, session, présentation, application) peut varier d'une session à l'autre.

Une session est établie entre deux terminaux pour un échange de données pendant un temps défini. L'établissement d'une session entre deux terminaux nécessite que les terminaux soient préalablement attachés à un réseau de communication. Une session, dans les réseaux IP *(en anglais Internet Protocol*), s'appuient sur des protocoles divers depuis la couche transport jusqu'à la couche application du modèle OSI *(en anglais Open Systems Interconnection*). Plusieurs sessions, simultanées ou non, peuvent être établies entre deux terminaux. Une seule session entre deux terminaux suffit pour considérer que les terminaux sont en communication. Pour cette raison, une session peut être assimilée à une communication. Une session est utilisée pour l'échange de données transportées le plus souvent en paquets. On pourra donc parler de session de données ou de session de paquets de données. Une session peut être uni-directionnelle, depuis un terminal vers un serveur ou bi-directionnelle depuis un terminal vers un serveur et depuis le serveur vers le terminal.

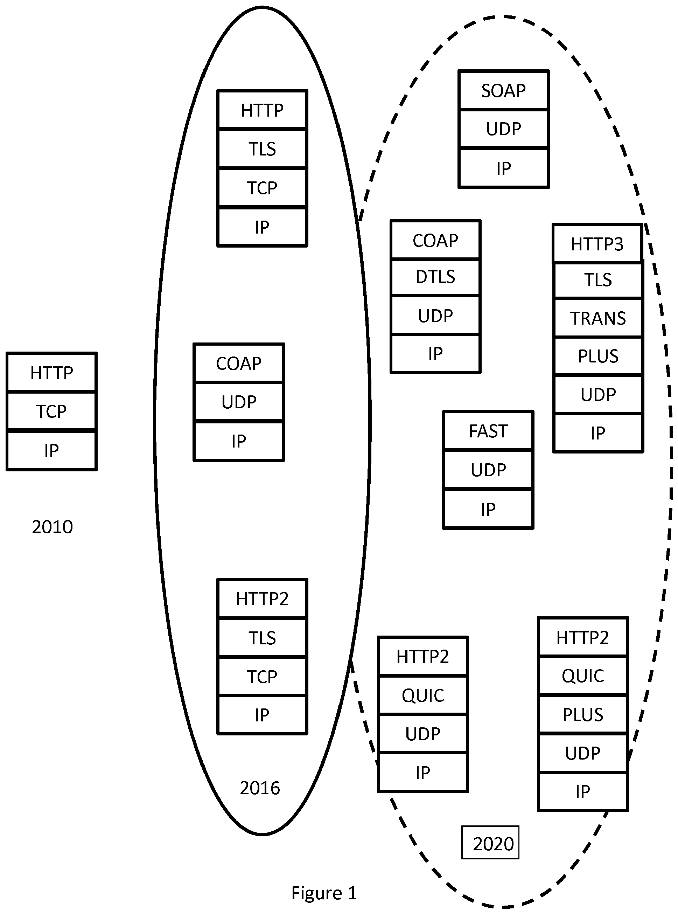

Le développement de la sécurisation des échanges a également pour conséquence une plus grande variété des protocoles utilisés pour les sessions sachant que des versions sécurisées des protocoles jusque-là utilisés ont été développées. Ces nouveaux protocoles sont souvent proposés par les fournisseurs de contenus, également fournisseurs de terminaux et/ou de systèmes d'exploitation, qui peuvent plus facilement introduire de nouveaux protocoles puisqu'ils maîtrisent aussi bien le terminal client que les serveurs de contenus. Le développement de nouveaux protocoles par les fournisseurs de contenus et plus généralement pour les sessions se vérifie d'autant plus qu'il s'agit de protocoles intervenant à partir de la couche transport et jusqu'à la couche application, c'est-à-dire pour assurer la communication de bout en bout. Ces nouveaux protocoles sont développés d'une part pour s'adapter au contexte des réseaux acheminant les données des sessions et notamment améliorer l'établissement des sessions, c'est-à-dire l'initialisation des échanges de données des sessions, ainsi que la qualité d'expérience pour les utilisateurs. Ainsi, à côté des protocoles historiques, à savoir HTTP *(en anglais HyperText Transfer Protocol*) sur TCP *(en anglais Transport Control Protocol*) ou UDP *(en anglais User Datagram Protocol*)) sur IP *(en anglais Internet Protocol*), des protocoles de chiffrement de la couche applicative, à savoir TLS *(en anglais Transport Layer Security)* ou DTLS *(en anglais Datagram Transport Layer Security)* peuvent être utilisés. Au niveau applicatif, il est désormais possible d'utiliser le protocole HTTP/2 et il est également possible d'utiliser le protocole QUIC *(en anglais Quick UDP Internet Connections)* comme protocole de transport. Ce ne sont que quelques exemples des nouveaux protocoles utilisés par les nœuds terminaux pour communiquer sur les réseaux IP. Le document WO 2016/173635 A1 (TELEFONAKTIEBOLAGET LM ERICSSON [SE]) 3 novembre 2016 (2016-11-03) concerne un système comprenant une entité émettrice, une entité réceptrice et une entité réseau interposée entre l'entité émettrice et l'entité réceptrice. L'entité réceptrice est configurée pour envoyer une requête de connexion à l'entité émettrice, et pour envoyer en outre, à l'entité émettrice, au moins une méta-information chiffrée pour ladite connexion. L'entité émettrice est configurée pour insérer l'au moins une méta-information chiffrée dans au moins un paquet de la connexion. L'entité réseau est configurée pour déchiffrer l'au moins une méta-information et pour traiter l'au moins un paquet sur la base de l'au moins une méta-information déchiffrée. La figure 1 illustre la diversité des différents protocoles pouvant être mis en œuvre dans un réseau de communications. Les protocoles indiqués dans la figure 1 sont donnés à titre d'exemple et les protocoles déployés ne se limitent pas à ceux de la figure 1. Ces évolutions des protocoles ne tiennent pas compte des infrastructures transportant les données des sessions alors qu'un nombre potentiellement important de fonctions dites intermédiaires, c'est-à-dire déployées sur le réseau de communication entre le terminal et le serveur, appliquent des traitements aux sessions en ajoutant des informations aux paquets transportant les données des sessions, en exploitant des informations des paquets ou en modifiant les données présentes dans les paquets.

Les opérateurs en charge de l'acheminement des données des sessions et plus globalement les entités intervenant dans l'établissement et la gestion des sessions ont en effet déployé de plus en plus de dispositifs en charge de traitements spécifiques sur les données des sessions. Ces traitements peuvent consister à améliorer l'acheminement, à comprimer les données, à enregistrer des informations relatives aux sessions, à adapter un codage, à appliquer une qualité de service aux paquets relatifs aux données. Ces différents traitements sont appliqués par les entités placées sur le chemin suivi par les données des sessions établies entre un terminal d'utilisateur et une application. Ces traitements sont en outre appliqués par les entités sans que l'utilisateur voire le fournisseur de services gérant le serveur fournissant les données requises par l'utilisateur via un terminal ne donnent leur consentement sur l'application des traitements, ni même qu'ils en soient informés. Les moyens pour informer et recueillir les autorisations des entités d'extrémités, à savoir le terminal et le serveur, d'une session par rapport à ces traitements ne sont pas prévus, ni dans les évolutions des protocoles utilisés pour les sessions ni dans de nouveaux protocoles qui pourraient être mis en œuvre pour assurer cet objectif d'approbation par une entité d'extrémité sur des traitements assurés par des entités intermédiaires ou par l'autre entité d'extrémité.

La présente invention a pour objet de remédier à ces inconvénients.

### 3. Exposé de l'invention

L'invention vient améliorer la situation à l'aide d'un procédé d'activation d'au moins une entité de traitement parmi une pluralité d'entités se situant sur le chemin des données d'une session entre un terminal d'un utilisateur et un serveur d'un fournisseur de services, le terminal et le serveur étant attachés à un réseau de communications, mis en œuvre dans ledit terminal et comprenant
- une étape d'émission à destination du serveur d'un message d'identification destiné à recevoir des identifiants d'entités de la pluralité ajoutés par les entités,
- une étape de réception en provenance du serveur d'un message d'acquittement comprenant des identifiants compris dans le message d'identification,
- une étape de sélection d'au moins un identifiant parmi ceux reçus du serveur,
- une étape d'émission à destination du serveur d'un message relatif à l'activation d'entités parmi la pluralité.

Les paquets des sessions de données entre un terminal et un serveur se voient appliquer différents traitements lors de leur transit dans le réseau de communications. Ces traitements peuvent être assurés par des entités distinctes et dans les techniques antérieures, sont appliqués sans que le terminal ou le serveur n'en ait connaissance et à fortiori sans qu'ils donnent un accord pour que ces traitements soient appliqués ou non.

Lors de l'établissement d'une session entre un terminal et un serveur ou sur une session établie, les entités de traitement sont identifiées par l'ajout d'un identifiant par chaque entité appliquant un traitement ou susceptible d'appliquer un traitement aux paquets d'une session. Ainsi, le serveur recevant les données de la session peut identifier toutes les entités présentes sur le chemin entre la source et le serveur. Ni le terminal, ni le serveur ne savent en effet à priori quels traitements sont appliqués sur une session donnée et cette phase d'identification est nécessaire. Elle correspond à une opération de découverte des entités. Parmi les entités présentes sur le chemin, certaines ont reçu un agrément du fournisseur en charge du serveur, par exemple dans une opération préalable à l'établissement de la session et d'autres non. Le serveur transmet dans un message d'acquittement des identifiants d'entités intermédiaires identifiées sur le chemin. Par défaut, il peut renvoyer tous les identifiants reçus dans le message d'identification ou seulement une partie d'entre eux.

Dans le cas où il renvoie tous les identifiants au terminal, le terminal dispose de l'information sur les entités intermédiaires sur le chemin, telles que communiquées par le serveur, et exploite cette information pour le procédé d'activation ou pour d'autres procédés, tels que par exemple la sélection d'un chemin, s'il reçoit des informations de serveurs distincts, mis en œuvre par des fournisseurs différents, pour un même service.

Le terminal, dans le procédé d'activation, transmet un message d'activation permettant à chaque entité de savoir si elle peut ou non appliquer le traitement pour les paquets suivants de la session de données. Le terminal, grâce à ce message d'activation, applique une politique sur les paquets de la session de donnée.

Le terminal peut en effet ainsi transmettre les paquets de la session en ayant la garantie que seules les entités autorisées par lui-même appliquent un traitement, le terminal ayant possiblement conservé un sous-ensemble des entités parmi les entités intermédiaires que le serveur lui aura communiquées.

Le fournisseur de services peut être aussi bien un fournisseur hébergeant des données qu'un fournisseur intermédiaire stockant temporairement des données tel qu'un fournisseur de services CDN (en anglais *Content Delivery Network)* ou un fournisseur de données stockées dans des serveurs cache. Le fournisseur de services peut également être un hébergeur de données d'un réseau d'entreprise.

Selon un aspect de l'invention, dans le procédé d'activation, le message d'acquittement comprend des identifiants d'entités de la pluralité agréées par le fournisseur.

Grâce à des accords établis préalablement à la session ou si la fonction est mise en œuvre par la même entité que l'entité en charge du serveur, ou bien encore s'il s'agit d'un traitement nécessaire à l'établissement de la session, le serveur indique au terminal les entités qu'il agréée parmi les entités de traitement identifiées. Dans ce cas, le serveur ne transmet au terminal que les identifiants d'entités agréées et le procédé d'activation permet de n'activer que des fonctions sélectionnées par le terminal mais aussi par le serveur. L'envoi des identifiants agréés par le fournisseur de services correspond à un consentement pour certaines entités de traitement, sur le chemin entre le terminal et le serveur. Ce consentement peut être exploité par le terminal pour lui-même agréer ou non la présence de certaines de ces fonctions sur le chemin et consécutivement les traitements appliqués aux paquets de la session.

Le serveur sélectionne donc un sous-ensemble des entités identifiées à partir du message d'identification transmis par le terminal et complété par les entités intermédiaires.

Selon un autre aspect de l'invention, dans le procédé d'activation, le message relatif à l'activation comprend une information pour désactiver des entités dont les identifiants ne sont pas sélectionnés par le terminal.

Des entités de traitement, lors de la mise en œuvre du procédé, possiblement effectuent d'ores et déjà des traitements sur les premières données échangées, avant la mise en œuvre du procédé. La désactivation de certaines entités permet d'indiquer à celles-ci de stopper leur traitement et donc de ne conserver sur le chemin que les entités de traitement sélectionnées par le terminal et le serveur. La présence d'une information de désactivation dans le message relatif à l'activation indique aux entités concernées qu'elles doivent cesser leur traitement.

Selon un autre aspect de l'invention, dans le procédé d'activation, le message relatif à l'activation comprend une information pour activer des entités dont les identifiants sont sélectionnés par le terminal.

Le procédé, lorsqu'il est mis en œuvre à l'initialisation d'une session, c'est-à-dire avant que toute donnée relative à la session soit transmise par le terminal, permet d'indiquer aux entités sélectionnées qu'elles doivent effectuer leur traitement sur les données de la session. Puisqu'aucune entité n'a été activée avant l'établissement de la session et consécutivement avant que le procédé ne soit effectivement mis en œuvre, le message relatif à l'activation permet dans ce cas d'activer uniquement les entités sélectionnées.

Selon un autre aspect de l'invention, dans le procédé d'activation, le message d'identification et le message relatif à l'activation sont des messages relatifs au protocole QUIC.

Le protocole QUIC (en anglais *Quick UDP IP Connections)* se positionne parmi les protocoles les plus envisagés dans les réseaux de communication. Il s'appuie sur le protocole UDP (en anglais User Datagram Protocol) et on peut considérer qu'il représente une alternative à TCP (en anglais Transport Control Protocol) même si les caractéristiques des deux protocoles ne sont pas identiques. Le protocole QUIC présente un intérêt grandissant pour les fournisseurs d'applications car il intègre des caractéristiques de chiffrement ainsi que des fonctions relatives à la qualité de service, grâce notamment aux possibilités de connexions multiplexées entre deux correspondants QUIC. L'utilisation de ce protocole pour les échanges entre le terminal et le serveur, dans le but d'identifier et d'activer les entités de traitement, est avantageux car il permet de combiner les fonctions intrinsèques du protocole que sont notamment la sécurité, la fiabilité, la disponibilité avec des services nouveaux tels que la découverte et la certification d'entités de traitement sur un chemin entre un terminal et un serveur pour une session donnée.

Selon un autre aspect de l'invention, dans le procédé d'activation, le message d'identification et le message relatif à l'activation comprennent en outre un identifiant de session.

Une entité de traitement peut possiblement appliquer des traitements pour des sessions de données différentes impliquant au moins une même extrémité (terminal ou serveur) ou des sessions de données entre extrémités complètement distinctes de celles pour lesquelles le procédé d'activation est mis en œuvre. Le message d'activation ayant pour objet d'indiquer aux entités de traitement si elles doivent appliquer un traitement ou non pour une session, il est avantageux d'ajouter une information de session aux paquets de données pour permettre à chaque entité de traitement de rapidement identifier la session concernée à partir de l'identifiant de session et d'appliquer ou non le traitement à ces paquets, relativement à l'information d'activation présente. Dans le cas où le protocole QUIC est utilisé pour la transmission de ces messages, l'identifiant de connexion peut être l'identifiant Connection ID tel que défini dans https://tools.ietf.org/html/draft-ietf-quic-transport-04 (Juin 2017). L'identifiant de session dans un message d'identification permet également aux entités de traitement d'associer l'identification requise avec une session donnée et ainsi par exemple de détecter des messages ayant des numéros de session identiques mais une origine et/ou une destination différente, ce qui n'est pas possible à priori.

Les différents aspects du procédé d'activation qui viennent d'être décrits peuvent être mis en œuvre indépendamment les uns des autres ou en combinaison les uns avec les autres.

L'invention concerne également un procédé d'acquittement d'identification d'au moins une entité de traitement parmi une pluralité d'entités se situant sur le chemin des données d'une session entre un terminal d'un utilisateur et un serveur d'un fournisseur de services, le terminal et le serveur étant attachés à un réseau de communications, mis en œuvre dans ledit serveur et comprenant
- une étape de réception en provenance du terminal d'un message d'identification comprenant des identifiants d'entités de la pluralité ajoutés par ces entités,
- une étape d'émission à destination du terminal d'un message d'acquittement comprenant des identifiants compris dans le message d'identification,
- une étape de réception en provenance du terminal d'un message relatif à l'activation d'entités parmi la pluralité.

Le procédé d'acquittement permet à un serveur, une fois que les entités de traitement sont identifiées pour une session, de pouvoir acquitter des entités présentes sur le chemin entre le terminal et le serveur géré par le fournisseur de services. Ceci permet avantageusement de pouvoir transmettre au terminal les identifiants des entités de traitement intervenant ou pouvant intervenir, dans le cas où la session n'est pas établie, sur les données de la session. L'envoi au terminal d'identifiants des entités permet ensuite à celui-ci de sélectionner des entités à partir des identifiants reçus du serveur. Le terminal décide finalement des entités intermédiaires qu'il souhaite autoriser pour la session parmi les entités reçues du serveur avec lequel le terminal a établi ou va établir une session.

Selon un aspect de l'invention, le procédé d'acquittement comprend en outre une étape de sélection des identifiants des entités agréées par le fournisseur parmi les identifiants reçus dans le message d'identification.

Le serveur peut intervenir dans la sélection des entités intermédiaires sur le chemin des données de la session en sélectionnant uniquement les entités qu'il a agréées. Une fois qu'il a reçu les identifiants des entités présentes sur le chemin, le serveur extrait les identifiants d'entités avec lesquelles un agrément existe, et transmet uniquement au terminal ces identifiants extraits de l'ensemble d'identifiant reçus dans le message d'identification.

Selon un aspect de l'invention, le procédé d'acquittement comprend en outre
- une étape d'émission d'un message de demande d'agrément à destination d'au moins une entité de la pluralité,
- une étape de réception d'un message de réponse d'agrément, en provenance de l'au moins une entité, comprenant la clé publique de l'entité.

Des messages relatifs à l'agrément entre le serveur et les entités de traitement peuvent être avantageusement échangés entre le serveur et les entités de traitement pour que le serveur détienne une liste d'entités de traitement ainsi que les clés publiques de ces entités. Sachant qu'un grand nombre d'entités sont susceptibles d'être déployées dans les réseaux de communication, par divers opérateurs ou fournisseurs de services, le serveur pourra effectuer une découverte des différentes fonctions préalablement à l'échange de messages d'agrément. Une alternative consiste à ce que des accords entre le fournisseur de services et les gestionnaires des entités de traitement soient établis pour que le serveur ne sollicite que les entités de traitement administrées par des gestionnaires avec lesquels un accord existe. L'échange des messages relatifs à l'agrément peut se produire de façon non corrélée avec les messages relatifs à une session donnée, puisqu'un agrément n'est pas spécifique à une session donnée.

Les différents aspects du procédé d'acquittement qui viennent d'être décrits peuvent être mis en œuvre indépendamment les uns des autres ou en combinaison les uns avec les autres.

L'invention concerne également un dispositif d'activation d'au moins une entité de traitement parmi une pluralité d'entités se situant sur le chemin des données d'une session entre un terminal d'un utilisateur et un serveur d'un fournisseur de services, le terminal et le serveur étant attachés à un réseau de communications, mis en œuvre dans ledit terminal et comprenant
- un émetteur, apte à émettre à destination du serveur un message d'identification destiné à recevoir des identifiants d'entités de la pluralité ajoutés par les entités,
- un récepteur, apte à recevoir en provenance du serveur un message d'acquittement comprenant des identifiants compris dans le message d'identification,
- un module de sélection, apte à sélectionner au moins un identifiant parmi ceux reçus du serveur,
- l'émetteur, également apte à émettre à destination du serveur un message relatif à l'activation d'entités parmi la pluralité.

Ce dispositif, apte à mettre en œuvre dans tous ses modes de réalisation le procédé d'activation qui vient d'être décrit, est destiné à être mis en œuvre dans un terminal.

L'invention concerne également un dispositif d'acquittement d'identification d'au moins une entité de traitement parmi une pluralité d'entités se situant sur le chemin des données d'une session entre un terminal d'un utilisateur et un serveur d'un fournisseur de services, le terminal et le serveur étant attachés à un réseau de communications, mis en œuvre dans ledit serveur et comprenant
- un récepteur, apte à recevoir en provenance du terminal un message d'identification comprenant des identifiants d'entités de la pluralité ajoutés par ces entités,
- un émetteur, apte à émettre à destination du terminal un message d'acquittement comprenant des identifiants compris dans le message d'identification,
- le récepteur, étant également apte à recevoir en provenance du terminal un message relatif à l'activation d'entités parmi la pluralité.

Selon un aspect de l'invention, le dispositif d'acquittement comprend en outre un module de sélection, apte à sélectionner des identifiants des entités agréées par le fournisseur parmi les identifiants reçus dans le message d'identification.

Selon un autre aspect de l'invention, le dispositif d'acquittement comprend en outre
- l'émetteur, également apte à émettre un message de demande d'agrément à destination d'au moins une entité de la pluralité,
- le récepteur, également apte à recevoir un message de réponse d'agrément, en provenance de l'au moins une entité, comprenant la clé publique de l'entité.

Ce dispositif d'acquittement, apte à mettre en œuvre dans tous ses modes de réalisation le procédé d'acquittement qui vient d'être décrit, est destiné à être mis en œuvre dans un serveur de données.

L'invention concerne aussi un système d'activation d'au moins une fonction intermédiaire comprenant
- Un terminal comprenant un dispositif d'activation,
- Un serveur comprenant un dispositif d'acquittement.
- Au moins une entité de traitement
   - apte à ajouter un identifiant au message d'identification reçu en provenance du terminal,
   - apte à activer un traitement relatif au message relatif à l'activation.

L'invention concerne aussi un programme d'ordinateur comprenant des instructions pour la mise en œuvre des étapes du procédé d'activation qui vient d'être décrit, lorsque ce programme est exécuté par un processeur.

L'invention concerne aussi un programme d'ordinateur comprenant des instructions pour la mise en œuvre des étapes du procédé d'acquittement qui vient d'être décrit, lorsque ce programme est exécuté par un processeur.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions des programmes d'ordinateur tel que mentionnés ci-dessus.

Le support d'informations peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### 4. Présentation des figures

D'autres avantages et caractéristiques de l'invention apparaitront plus clairement à la lecture de la description suivante de modes de réalisation particuliers de l'invention, donnés à titre de simples exemples illustratifs et non limitatifs, et des dessins annexés, parmi lesquels :
- la figure 1 présente une vue simplifiée de l'évolution des protocoles de communication,
- la figure 2 présente une infrastructure de communications selon un aspect de l'invention,
- la figure 3 présente un aperçu du procédé d'activation selon un premier mode de réalisation de l'invention,
- la figure 4 présente un aperçu des étapes du procédé d'activation selon un second mode de réalisation de l'invention,
- la figure 5 présente un aperçu des étapes du procédé d'activation selon un troisième mode de réalisation de l'invention,
- la figure 6 présente un exemple de structure d'un dispositif d'activation selon un aspect de l'invention,
- la figure 7 présente un exemple de structure d'un dispositif d'acquittement, selon un aspect de l'invention.

### 5. Description détaillée d'au moins un mode de réalisation de l'invention

Dans la suite de la description, on présente des exemples de plusieurs modes de réalisation de l'invention dans un réseau de communications. L'invention peut indifféremment être mise en œuvre dans un réseau de communications fixes ou mobiles.

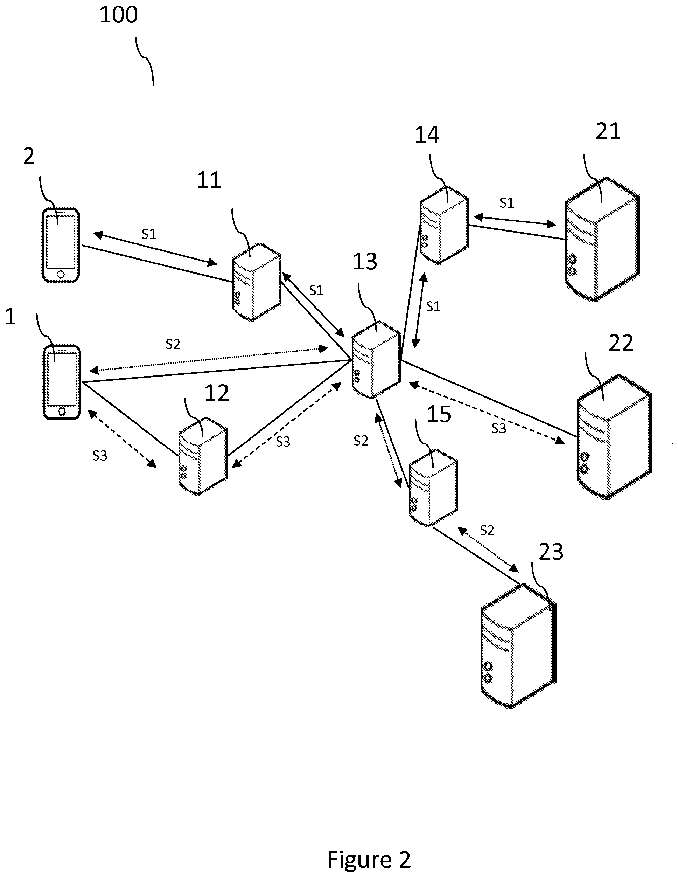

On se réfère tout d'abord à la **figure 2** qui présente un réseau de communications selon un aspect de l'invention.

Les terminaux 1,2 et les serveurs 21, 22, 23 sont connectés au réseau de communications 100. Les terminaux 1, 2 peuvent être des terminaux fixes ou mobiles et les serveurs 21, 22, 23 peuvent être des serveurs HTTP *(en anglais HyperText Transfer Protocol*), FTP *(en anglais File Transfer Protocol*), des serveurs cache ou CDN *(en anglais Content Delivery Networks)* ou tout autre type de dispositif stockant des données disponibles pour des terminaux. Le réseau de communications 100 peut être une infrastructure fixe ou mobile, destinées à acheminer des données de clients appartenant à des entreprises ou de clients dits résidentiels. Le réseau 100 peut être composé de plusieurs sous réseaux, par exemple d'un sous réseau d'accès et d'un sous réseau cœur. Le réseau 100 peut être administré par une ou plusieurs entités distinctes.

Dans le réseau 100, le terminal 2 établit une session S1 de communications avec le serveur 21. Cette session S1 de données peut être unidirectionnelle, du terminal 2 au serveur 21, ou bidirectionnelle, du terminal 2 vers le serveur 21 et du serveur 21 vers le terminal 2. La session S1 emprunte un chemin sur lequel sont déployées des entités de traitement 11, 13, 14. Ces entités de traitement 11, 13, 14 peuvent être administrées par un même gestionnaire ou des gestionnaires distincts. Ces entités de traitement, aussi appelées fonctions intermédiaires, peuvent être déployées dans des équipements spécifiques ou non, ou bien encore instanciées dans une architecture virtualisée. Une entité de traitement peut notamment être une fonction réseau virtualisée (VNF (en anglais *Virtual Network Function)).* Les traitements appliqués par ces fonctions peuvent varier. Ainsi, certaines ont pour objet d'améliorer l'acheminement des paquets de la session S1 de données, d'autres assurent une mission relative à la sécurité, d'autres relèvent d'obligations légales et d'autres sont relatives à la qualité de service de relative à l'acheminement des paquets. Il n'y a pas de limite au nombre d'entités de traitement intervenant pour une session. Dans les réseaux mobiles, par exemple, de nombreuses entités de traitement interviennent entre la passerelle d'accès et le dispositif interconnectant l'infrastructure mobile et l'Internet.

Les sessions de terminaux peuvent transiter par des entités de traitement distinctes. Ainsi, des entités de traitement distinctes peuvent intervenir sur des sessions en fonction par exemple du service pour lequel une session est établie, du terminal, du serveur, du réseau de communications, du nombre de sessions acheminées par le réseau de communications. Le terminal 1 établit deux sessions S2 et S3. Les données de la session S2, établie avec le serveur 23, sont traitées par les entités de traitement 13 et 15 lors de leur acheminement vers le serveur 23 tandis que les données de la session S3, établie par le terminal 1 avec le serveur 22, sont traitées par les entités de traitement 12 et 13 avant de parvenir à leur destination, à savoir le serveur 22. Dans le cas de sessions bidirectionnelles, les données des sessions issues d'un serveur à destination d'un terminal, par exemple du serveur 22 vers le terminal 1, pourront suivre le même chemin que les données émises par les terminaux, auquel cas un mécanisme, par exemple basé sur des attributs de routage, devra être mis en œuvre en complément de l'invention. Dans le cas où les chemins empruntés par les données dans chaque sens sont différents, des entités de traitement différentes sont envisageables.

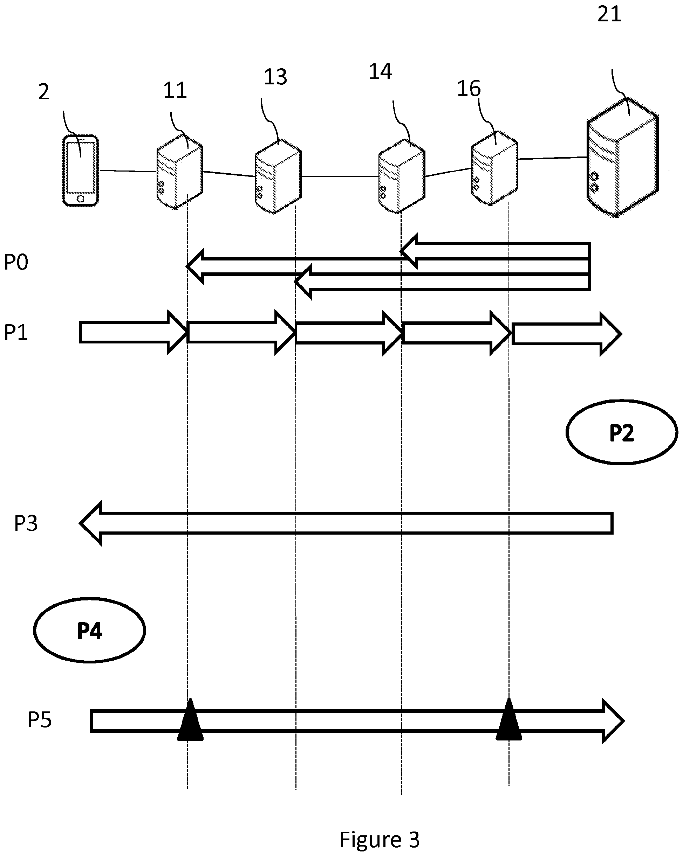

En relation avec la **figure 3****,** on présente un aperçu du procédé d'activation selon un premier mode de réalisation de l'invention. Ce mode est dit générique et ne précise pas notamment le protocole utilisé pour la transmission des messages.

Une session est établie ou en cours d'établissement entre le terminal 2 et le serveur 21. Si la session est établie, des données de la session sont déjà échangées entre le terminal et la session lors de la mise en place du procédé. Si la session est en cours d'établissement, aucune donnée de la session n'a été échangée entre le terminal et le serveur lors de la mise en œuvre du procédé. Ni le terminal 2, ni le serveur 21 ne savent à ce moment quels traitements sont ou seront appliqués aux données de la session.

Lors d'une phase P0, le serveur 21 met en place un processus d'agrément avec certaines entités de traitement. Plus précisément, le serveur 21 sollicite, à travers un échanges de messages d'agrément, les entités de traitement 11, 14, 16 pour convenir que ces entités de traitements peuvent appliquer un traitement aux données destinées au serveur 21. Les entités 11, 13, 14 sont ainsi considérées comme agréées par le serveur 21. Cet agrément peut par exemple consister à un échange de clés pour déchiffrer des messages échangés entre l'entité et le serveur et/ou par l'échange d'identifiants. Pour des aspects relatifs à la sécurité des données, l'échange de clés est recommandé. Les entités 11, 13, 14 peuvent ainsi fournir leurs clés publiques au serveur 21. On considère dans cet exemple que l'entité 16 n'établit pas d'agrément avec le serveur 21. Le serveur 21 sollicite les entités 11, 13, 14 parce que possiblement, un accord existe entre le fournisseur de services administrant le serveur 21 et les opérateurs en charge de la gestion des entités 11, 13, 14. Le serveur 21 peut, selon une alternative, les solliciter suite à la mise en œuvre d'un mécanisme non décrit de découverte par le serveur 21 des entités de traitement réalisée préalablement à la phase P0.

Lors de la phase P1, le terminal 2 émet un message à destination du serveur 21. Ce message, empruntant le chemin de données de la session entre le terminal 2 et le serveur 21, transite par les entités de traitement 11, 13, 14, 16 situées sur le chemin. Chacune de ces entités, placées sur le chemin, effectue un traitement sur les données de la session. On considère, selon une alternative, que l'entité 11 extrait des informations des paquets et correspond par exemple à une fonction de DPI (en anglais *Deep Packet Inspection)* effectuée par l'opérateur fournissant la connectivité au terminal 2. L'entité 13, gérée par un autre opérateur, transmet des données de la session à une entité réalisant des analyses de trafic. L'entité 14 effectue un traitement d'enrichissement des données de la session. L'entité 16 effectue une translation des adresses IP (en anglais *Internet Protocol*) présentes dans les en-têtes des paquets de données. A la réception du message transmis par le terminal 2, chaque entité 11, 13, 14, 16 ajoute successivement un identifiant qui lui est propre, par exemple son adresse IP ou une information telle que le nom de domaine ou tout autre type d'identifiant, au message. Le message ou l'identifiant, selon une alternative, peut être chiffré par une entité intermédiaire pour éviter qu'une autre entité sur le chemin, ou un dispositif qui obtiendrait le message ne puisse exploiter une information transmise relative à l'identifiant transmise. L'entité intermédiaire peut chiffrer les informations relatives à son identification en utilisant par exemple sa clé privée et le serveur pourra déchiffrer l'information chiffrée, à la réception du message, en utilisant sa clé publique, par exemple obtenue lors de la phase P0. Lorsqu'il reçoit le message émis par le terminal 2 et traitées par les entités 11, 13, 14, 16, le serveur 21 peut extraire l'ensemble des identifiants ajoutés par les différentes entités sur le chemin emprunté par les données de la session. Il est à noter que des entités de traitement peuvent être sur le chemin emprunté par les données mais celles-ci peuvent ne pas ajouter leur identifiant, ce qui a pour conséquence ne pas être considérée ni par le serveur 21 ni par le terminal 2 dans le déroulement des étapes du procédé. Selon la mise en œuvre du précédé d'activation, elles peuvent néanmoins être impactées par l'activation se déroulant en phase P5.

Lors de la phase P2, selon une alternative, le serveur 21 sélectionne parmi les identifiants reçus les identifiants d'entités correspondant à des entités agréées par le serveur 21 ou le fournisseur de services en charge du serveur 21 lors de la phase P0. Le serveur 21 sélectionne les entités 11, 13, 14 présents sur le chemin et ne sélectionne pas l'entité 16, non agréée par le serveur 21. Si la phase P0 consistait à un échange d'identifiants, alors le serveur 21 effectue une comparaison des identifiants reçus dans le message émis par le terminal 2 lors de la phase P1 avec les identifiants correspondant à des entités avec lesquelles un agrément est conclu lors de la phase P0 et ne sélectionne que les identifiants des entités agréées parmi les identifiants reçus lors de la phase P1. Afin de mener cette sélection, le serveur 21 peut maintenir une base de données locale ou externe au serveur, comprenant les identifiants des entités agréées. Si l'agrément est mis en œuvre de façon sécurisée, alors l'entité de traitement peut chiffrer les données ajoutées avec sa clé privée, renforçant la confidentialité par rapport aux autres entités de traitement sur le chemin et l'authenticité de l'identifiant transmis. Le serveur 21 peut déchiffrer les identifiants en utilisant la clé publique correspondante. Le chiffrement par une entité intermédiaire 11, 13, 14, 16 de l'identifiant qu'elle ajoute au message d'identification lors de son transit et destiné au serveur 21 permet non seulement d'identifier de façon non ambigüe une entité de traitement 11, 13, 14, 16 mais également de pouvoir vérifier que l'entité de traitement 11, 13, 14 correspond effectivement à une entité pour laquelle un agrément a été préalablement établi entre le serveur 21 et l'entité 11, 13, 14 de traitement. L'utilisation de la clé privée pour chiffrer l'identifiant, dans le cas où elle est aussi utilisée par les entités 11, 13, 14 pour l'activation, peut en outre permettre au serveur 21 de s'assurer que l'entité de traitement 11, 13, 14 ayant été activée grâce au message d'activation est bien une entité de traitement 11, 13, 14 avec laquelle un agrément a été conclu avec le serveur 21.

Selon une autre alternative, le serveur 21 ne réalise pas de sélection d'entités intermédiaires. Il reçoit les identifiants lors de la phase P1 mais n'effectue pas lors de la phase P2 de sélection d'identifiants parmi ceux reçus. La phase P2, dans ce cas, ne sert qu'à collecter les identifiants.

Dans le cas où le serveur n'effectue pas de sélection lors de la phase P2, lors de la phase P3, le serveur 21 transmet au terminal 2 les identifiants des entités 11, 13, 14, 16 reçus dans un message d'identification, permettant au terminal 2 d'avoir connaissance des entités effectivement présentes sur le chemin emprunté par les données de session entre le terminal 2 et le serveur 21.

Selon une alternative, le serveur 21 ne transmet au terminal 2 que les entités intermédiaires agréées par le serveur 21. Le serveur 21 transmet ainsi les identifiants des entités 11, 14, 16 au terminal 2. Cette alternative est considérée dans les échanges suivants. Le serveur 21 transmet ces informations au terminal 2 en réponse au message reçu du terminal 2 lors de la phase P2 mais ce message peut utiliser un chemin différent voire un protocole différent de celui utilisé par le message envoyé par le terminal 2.

Selon une alternative, le serveur 21 peut joindre un certificat garantissant son identité au message d'acquittement transmis au terminal 2. La présence d'un certificat du fournisseur de services dans le message d'acquittement reçu par le terminal 2 permet de garantir que le message provient effectivement de ce fournisseur de services. Il peut en outre être transmis par le terminal 2 dans le message d'activation pour informer les entités de traitement 11, 14 sélectionnées que le fournisseur de services a autorisé, tout comme le terminal 2, l'activation des traitements réalisés par les entités 11, 14. Dans le cas où le traitement assuré par l'entité est relatif au serveur 21, par exemple s'il s'agit de recueillir et de stocker des données destinées au serveur 21, l'autorisation du fournisseur de services que révèle la présence du certificat, peut être exploitée par l'entité de traitement 11, 14.

Lors de la phase P4, le terminal 2 sélectionne des entités à partir des identifiants reçus du serveur 21 lors de la phase P3. Le terminal 2 ayant reçu les identifiants des entités 11, 14, 16, il doit ensuite décider quels identifiants et donc quelles entités il souhaite activer pour le transfert des données de la session. Dans le cas où l'identifiant est explicite, par exemple une chaîne de caractères, cette information peut être exploitée par l'utilisateur pour décider de l'activation ou non. Ainsi, un identifiant de type Middlebox_opérateur A ou Middlebox_opérateurB peut être plus facilement exploité par l'utilisateur qu'une chaîne de caractères sans signification pour l'utilisateur à priori. Ainsi, l'utilisateur peut intervenir dans la sélection des identifiants et par conséquent des entités de traitement sur la session.

Lors de la phase P5, le terminal 2 transmet au serveur 21 un message relatif à l'activation des entités qu'il a sélectionnées lors de la phase P4. L'activation peut consister à ce qu'une entité exécute une tâche pour laquelle elle est déployée. Un équipement de type pare-feu exécute une fonction de filtrage si elle est activée, une entité de traitement DPI exécute une fonction d'identification de flux si elle est activée, une entité d'enrichissement ajoute des données d'enrichissement lorsqu'elle est activée. La désactivation d'un traitement consiste à ne pas exécuter les actions correspondantes. Si une entité assure plusieurs traitements, une information supplémentaire indiquant le traitement concerné est ajouté au message d'activation. Le message, selon une alternative, contient les identifiants des entités intermédiaires sélectionnées par le terminal. Une entité intermédiaire dont l'identifiant est dans le message, applique son traitement aux données de la session. Si l'identifiant d'une entité n'est pas dans le message, alors l'entité désactive le traitement effectué. Selon une autre alternative, les entités dont les identifiants sont dans le message, désactivent le traitement des données de la session ou ne le démarrent pas si la session n'est pas initialisée tandis que les entités dont l'identifiant n'est pas présent continuent leur traitement sur les données de la session ou démarrent le traitement si la session n'est pas initialisée. Dans le mode de réalisation présenté, le message relatif à l'activation indique aux entités 11 et 16 sur le chemin des données de la session établie avec 21 d'activer leur traitement.

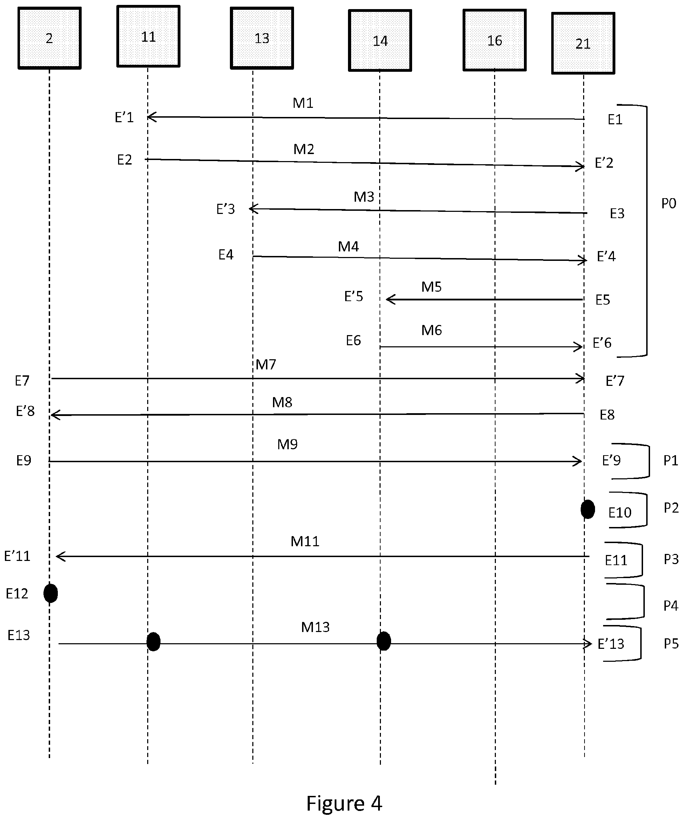

On se réfère maintenant à la **figure 4** qui présente un aperçu des étapes du procédé d'activation selon un second mode de réalisation de l'invention. Dans ce mode de réalisation, la session entre le terminal 2 et le serveur 21 n'est pas établie et le procédé se déroule avant que des données de session ne soient transmises pas le terminal au serveur. Les messages dans ce mode de réalisation sont transmis en utilisant le protocole QUIC. Les phases du procédé, telles que présentés dans la figure 3, sont rappelées dans cette figure qui décrit les messages échangés entre le terminal 2, le serveur 21 et les entités 11, 13, 14, 16.

Lors de la phase P0, les échanges suivants ont lieu.

Lors de l'étape E1, le serveur 21 transmet à l'entité 11 un message M1 de type « HTTP Get » que l'entité 11 réceptionne lors de l'étape E'1.

En réponse, lors de l'étape E2, l'entité 11 transmet au serveur 21 un message M2 de type 200 OK comprenant une clé publique de l'entité 11 et un identifiant, tel que l'adresse IP utilisée par l'entité 11. Le serveur 21 reçoit ce message lors de l'étape E'2.

Les étapes E3, E'3, E4, E'4 d'une part et E5, E'5, E6, E'6 d'autre part sont respectivement identiques aux étapes E1, E'1, E2, E'2 à la différence qu'elles impliquent respectivement les entités 13 et 14 et non l'entité 11. De façon correspondante, les messages M3 et M4 d'une part et les messages M5 et M6 d'autre part sont respectivement identiques aux messages M1 et M2.

A l'issue de la phase P0, le serveur 21 détient des clés publiques ainsi que les adresses IP des entités 11, 13 et 14, formalisant l'agrément de ces entités avec le serveur 21 dans ce mode de réalisation.

Lors de l'étape E7, le terminal 2 transmet un message M7 de type QUIC Client Hello au serveur 21 qui le reçoit lors de l'étape E'7.

Lors de l'étape E8, le serveur 21 transmet un message M8 de type QUIC server Hello au terminal 2 qui le reçoit lors de l'étape E'8.

Ces messages ont pour objet la négociation de paramètres, notamment de sécurité, relatifs à l'établissement d'une session entre le terminal 2 et le serveur 21.

Lors de l'étape E9, correspondant à la phase P1, le terminal 2 transmet un message M9 de type QUIC SIG à destination du serveur 21 afin d'identifier les entités sur le chemin emprunté par les données de la session entre le terminal 2 et le serveur 21. Les entités 11, 13, 14, 16 ajoutent un identifiant au message QUIC SIG lorsqu'elles reçoivent le message M9. Lorsqu'une entité retransmet le message M9, le message contient une nouvelle information correspondant à son adresse IP. Les entités ajoutent leur adresse IP au message QUIC SIG reçu du terminal 2 et à destination du serveur 21. Le serveur 21 reçoit le message QUIC SIG comprenant notamment les adresses IP des entités 11, 13, 14, 16 lors de l'étape E'9.

Lors de l'étape E10, correspondant à la phase P2, le serveur 21 identifie à partir des adresses IP, les entités avec lesquelles un agrément a été conclu lors de la phase P0 et sélectionne les entités 11, 13 et 14.

Le serveur 21, lors de l'étape E11, correspondant à la phase P3, transmet les adresses IP des entités qu'il a agréées dans un message d'acquittement M11 de type QUIC SIG à destination du terminal 2. Ce message M11 QUIC SIG, comprenant les adresses IP des entités de traitement agréées, peut être chiffré à partir des paramètres, tels que des clés de chiffrement, négociés dans les messages M7 et M8, de façon à garantir la confidentialité et l'authenticité du message M11. Selon une alternative, les identifiants transmis peuvent être des noms de domaine, noms de service référencés dans une base de type serveur DNS ou tout autre type d'identifiant, en fonction du type d'information ajouté par les entités de traitement. Le terminal 2 reçoit le message M11 QUIC SIG lors de l'étape E'11 et sélectionne, lors de l'étape E12, de la phase P4, les adresses IP des entités de traitement 11, 14 qu'il souhaite conserver pour la session parmi les entités agréées par le serveur 21 et transmises dans le message M11. Cette sélection par le terminal 2 peut s'opérer à partir d'adresses IP pré-configurées dans le terminal 2 ou par résolution inverse, en obtenant le service ou le nom associé à l'adresse IP de l'entité de traitement, si l'identifiant est une adresse IP. L'utilisateur du terminal peut, selon une alternative, accepter ou refuser une entité dont le nom lui sera indiqué sur l'écran, par exemple parce qu'elle est mise en œuvre par un opérateur ou un acteur non reconnu ou non désiré, une fois la résolution inverse effectuée s'i l'identifiant est une adresse IP, ou bien en l'absence de résolution, si l'identifiant de l'entité est explicite pour un utilisateur.

Lors de l'étape E13, correspondant à la phase P5, le terminal 2 transmet dans un message M13 d'activation de type QUIC les données de la session ou plus précisément les paquets comprenant les données de la session au serveur 21. Pour être sûr que les paquets empruntent le même chemin que le message M9 des fonctions complémentaires de routage peuvent être utilisées. Le message M13 comprend en outre une information permettant d'activer les entités retenues par le terminal 2. Le message M13 peut comporter les identifiants des entités de traitement sélectionnées, ce qui indique aux entités dont les identifiants ne sont pas présents, de ne pas activer le traitement sur les paquets des données de cette session. Selon une alternative, le message M13 peut comprendre un identifiant de session permettant aux entités de pouvoir directement associer une session et, à partir des identifiants présents, une autorisation ou non d'appliquer un traitement, à partir de l'identifiant présent ou non dans le message M13, sur les données de la session dont l'identifiant est dans le message M13. Selon, une alternative, le message M13 peut être chiffré par le terminal 2, par exemple à l'aide de sa clé privée. L'envoi d'un message M13 d'activation chiffré par le terminal 2, en utilisant notamment une clé privée, permet d'indiquer à chaque entité 11,14 sélectionnée par le terminal 2 que le terminal 2 ou l'utilisateur est bien celui qui a agréé ladite entité 11, 14. Cela permet d'éviter qu'une entité de traitement soit activée ou désactivée par l'envoi d'un message non transmis par le terminal. Les entités de traitement sélectionnées par le terminal 2 pour la session peuvent en outre utiliser le chiffrement pour authentifier le terminal 2 et pour appliquer un traitement spécifique en fonction du terminal 2 qui a émis le message, et dont l'authenticité est garantie par le chiffrement à partir de la clé privée du terminal. Les entités de traitement 11, 14 doivent posséder les clés publiques associées à la clé privée pour pouvoir déchiffrer le message envoyé par le terminal 2.

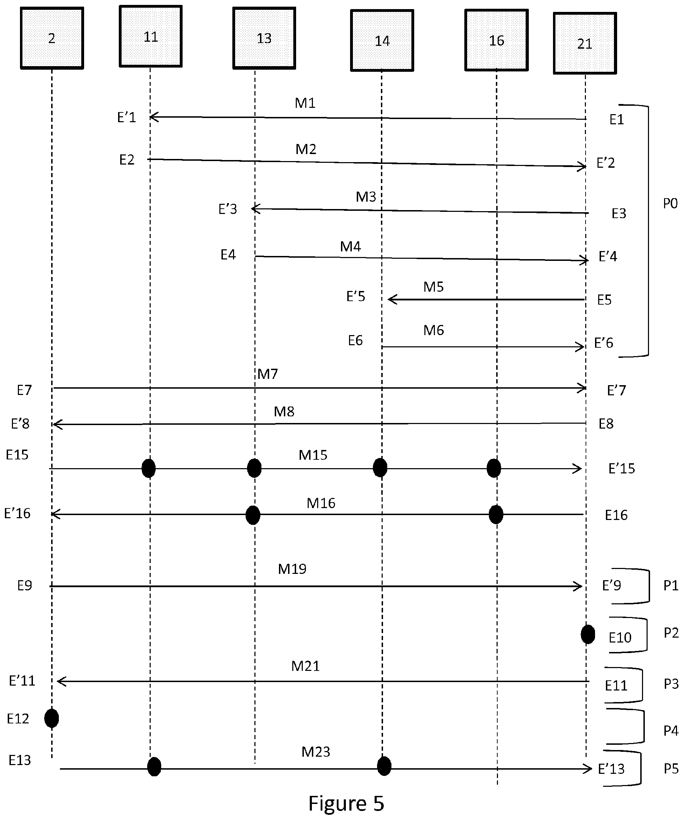

On se réfère maintenant à la **figure 5** qui présente un aperçu des étapes du procédé de sélection selon un troisième mode de réalisation de l'invention. Dans ce mode de réalisation, la session entre le terminal 2 et le serveur 21 est établie lorsque le procédé est mis en œuvre et des paquets de la session ont déjà été échangés entre le terminal 2 et le serveur 21. Dans la figure 4, pour rappel, la session était en cours d'établissement et des données de session n'avaient pas été échangées entre le terminal 2 et le serveur 21 lors de la mise en œuvre du procédé. Des entités de traitement ont déjà appliqué un traitement aux paquets de la session de données échangés entre le terminal 2 et le serveur 21.

Les étapes et les messages lors de la phase P0 sont identiques aux étapes et messages échangés lors de la phase P0 de la figure 4. Il est à noter que cette phase P0, pour les différents modes de réalisation, n'est pas relative à une session de données précise et qu'elle n'est pas mise en œuvre pour chaque session de données notamment. Le procédé peut en outre être mis en œuvre en l'absence de phase P0. Dans ce cas, le serveur 21 n'effectue pas de sélection d'entités de traitement.

Aux étapes E7, E'7 puis E8, E'8 les messages respectifs M7 et M8 sont échangés entre le terminal 2 et le serveur 21. Les messages M7 et M8 sont par exemple des messages TCP de négociation de paramètres de session entre le terminal 2 et le serveur 21.

Lors de l'étape E15, le terminal 2 transmet des données de session au serveur 21. Le terminal 2 transmet un message M15 comprenant les données de la session. Les données du message M15 se voient appliquer des traitements par les entités respectives 11, 13, 14, 16. Le message M15 est reçu par le serveur 21 lors de l'étape E'15. Le message M15 peut par exemple être un message de requête HTTP.

Le serveur 21 transmet un message M16 au terminal 2 lors de l'étape E16. Le message est par exemple un message HTTP d'envoi d'un contenu. Les données de ce message M16 sont traitées par les entités de traitement 13 et 16. Le message M16 est reçu par le terminal 2 lors de l'étape E'16. Les entités de traitement appliquent des traitements de la session sans avoir reçu d'information explicite, ni du terminal 2, ni du serveur 21 pour appliquer ou non ces traitements, comparativement à ce qui est réalisé dans les techniques relevant de l'art antérieur.

A l'étape E9, le terminal 2 transmet au serveur 21 un message M19 d'identification basé sur le protocole TCP auquel chaque entité de traitement ajoute un identifiant EqID basé par exemple sur 24 éléments binaires et identifiant l'entité de traitement sur le chemin. Ce message est reçu par le serveur 21 à l'étape E'9.

L'étape E10 est équivalente à l'étape E10 de la figure 4 sauf que le serveur 21 utilise les identifiants EqID ajoutés par chaque entité de traitement lors du transit du message M19. Lors de la phase P0, le serveur 21 aura obtenu les identifiants EqID des entités de traitement avec lesquelles un agrément est conclu.

A l'étape E11, le serveur 21 transmet un message M21 basé également sur le protocole TCP et comprenant les identifiants EqID des entités agréées par le serveur 21 parmi l'ensemble des identifiants reçus dans le message M19. Ce message est reçu par le terminal 2 lors de l'étape E'11. Le message M19 comprend les identifiants EqID des entités 11, 13, 14.

L'étape E12 est identique à l'étape E12 de la figure 4.

A l'étape E13, le terminal 2 transmet un message M23 de désactivation des entités de traitement non validées par le terminal 2. Ce message M23 de désactivation comprend les identifiants EqID des entités ne devant pas appliquer de traitement aux données de la session et qui doivent donc cesser leur traitement tel qu'appliqué au message M15. Le message M23 indique aux entités 13 et 16 de cesser leur traitement et ne subsistent alors sur le chemin que les traitements des entités 11 et 14. Il est à noter que les entités de traitement, selon une alternative, peuvent confirmer la prise en compte du message d'activation, et l'activation ou la désactivation demandée, en ajoutant une information chiffrée avec leur clé privée qui sera déchiffrée par le serveur 21, informant ainsi le serveur 21 de la désactivation, dans ce mode de réalisation, des entités 13 et 16.

Il est à noter que ce procédé peut, dans ses différents modes de réalisation, être mis en œuvre pour chaque sens de transmission des données d'une session, du terminal vers le serveur et du serveur vers le terminal, les traitements des données pouvant être spécifiques aux sens de transmission de données. Selon une alternative, un même message peut être utilisé pour activer les fonctions pour chaque sens de transmission, une information sur le sens de transmission permettant aux fonctions intermédiaires d'appliquer ou non un traitement selon le sens. Selon une autre alternative, un message d'activation sera transmis par sens de transmission.

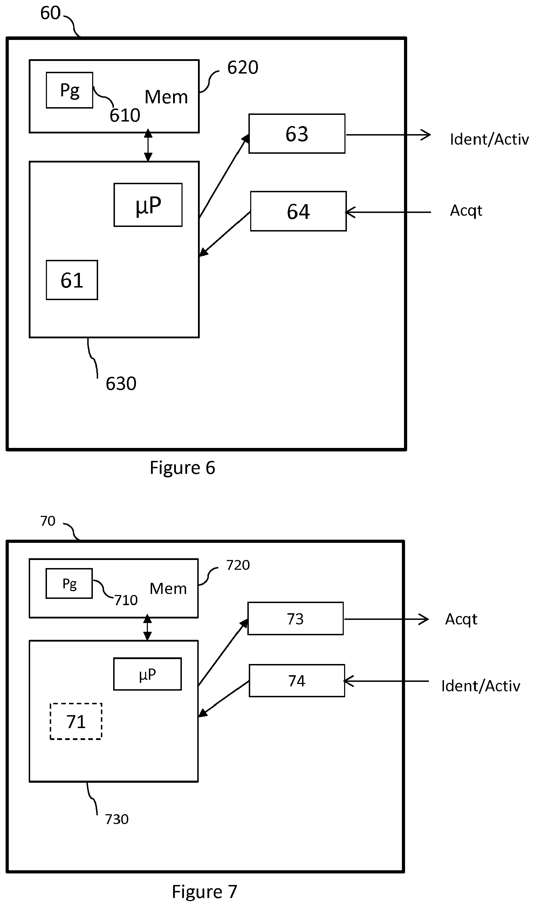

En relation avec la **figure 6****,** on présente un exemple de structure d'un dispositif d'activation, selon un aspect de l'invention.

Le dispositif 60 d'activation d'au moins une entité de traitement parmi une pluralité d'entités met en œuvre le procédé d'activation, dont différents modes de réalisation viennent d'être décrits.

Un tel dispositif 60 peut être mis en œuvre dans un terminal. Le terminal peut être un terminal mobile ou un terminal fixe.

Par exemple, le dispositif 60 comprend une unité de traitement 630, équipée par exemple d'un microprocesseur µP, et pilotée par un programme d'ordinateur 610, stocké dans une mémoire 620 et mettant en œuvre le procédé d'activation selon l'invention. A l'initialisation, les instructions de code du programme d'ordinateur 610 sont par exemple chargées dans une mémoire RAM, avant d'être exécutées par le processeur de l'unité de traitement 630.

Un tel dispositif 60 comprend :
- un émetteur 63, apte à émettre à destination du serveur un message Ident d'identification destiné à recevoir des identifiants d'entités de la pluralité ajoutés par les entités,
- un récepteur 64, apte à recevoir en provenance du serveur un message Acqt d'acquittement comprenant des identifiants compris dans le message d'identification,
- un module de sélection 61, apte à sélectionner au moins un identifiant parmi ceux reçus du serveur,
- l'émetteur 63, également apte à émettre à destination du serveur un message Activ relatif à l'activation d'entités parmi la pluralité.

En relation avec la **figure 7****,** on présente un exemple de structure d'un dispositif d'acquittement, selon un aspect de l'invention.

Le dispositif 70 d'acquittement d'au moins une entité de traitement parmi une pluralité d'entités, met en œuvre le procédé d'acquittement, dont différents modes de réalisation viennent d'être décrits.

Un tel dispositif 70 peut être mis en œuvre dans un serveur.

Par exemple, le dispositif 70 comprend une unité de traitement 730, équipée par exemple d'un microprocesseur µP, et pilotée par un programme d'ordinateur 710, stocké dans une mémoire 720 et mettant en œuvre le procédé de sélection selon l'invention. A l'initialisation, les instructions de code du programme d'ordinateur 710 sont par exemple chargées dans une mémoire RAM, avant d'être exécutées par le processeur de l'unité de traitement 730.

Un tel dispositif 70 comprend :
- un récepteur 74, apte à recevoir un message Ident d'identification comprenant des identifiants d'entités de la pluralité ajoutés par ces entités,
- un émetteur 73, apte à émettre à destination du terminal un message Acqt d'acquittement comprenant des identifiants compris dans le message d'identification,
- le récepteur 74, étant également apte à recevoir en provenance du terminal un message Activ relatif à l'activation d'entités parmi la pluralité.

Le dispositif 70 d'acquittement peut comprendre en outre un module de sélection 71, apte à sélectionner des identifiants des entités agréées par le fournisseur parmi les identifiants reçus dans le message d'identification.

Le dispositif 70 d'acquittement peut comprendre en outre
- l'émetteur 73, apte à émettre un message de demande d'agrément à destination d'au moins une entité de la pluralité,
- le récepteur 74, apte à recevoir un message de réponse d'agrément, en provenance de l'au moins une entité, comprenant la clé publique de l'entité.

Les modules décrits en relation avec la figure 6 et la figure 7 peuvent être des modules matériels ou logiciels.

Les exemples de réalisation de l'invention qui viennent d'être présentés ne sont que quelques-uns des modes de réalisation envisageables. Le procédé d'activation et le procédé d'acquittement permettent de pouvoir avantageusement contrôler les interventions de fonctions intermédiaires. L'utilisateur d'un terminal peut ainsi connaître les traitements sur ses données et autoriser ou non ces traitements, renforçant ainsi le contrôle des utilisateurs sur le stockage, sur les modifications ainsi que sur l'exploitation des données. Par l'intermédiaires d'accords entre un fournisseur de services et des opérateurs, le procédé permet en outre de décider quel opérateur transporte ses données. En effet, des protocoles multi-chemins, les que MTCP (en anglais *Multipath TCP)* sont désormais utilisés pour renforcer la disponibilité et la qualité de service. Chaque chemin d'une session peut comprendre des entités distinctes, possiblement mises en œuvre par des opérateurs également distincts. L'utilisateur, ou le terminal s'il s'agit d'une sélection automatique, peut sélectionner un ou plusieurs chemins en fonction des entités de traitement identifiées sur les chemins et ainsi intervenir sur la politique d'acheminement des données d'une session empruntant possiblement plusieurs chemins.

## Revendications

1. Procédé d'activation d'au moins une entité (11, 14) de traitement parmi une pluralité d'entités (11, 13, 14, 16) se situant sur le chemin des données d'une session entre un terminal (2) d'un utilisateur et un serveur (21) d'un fournisseur de services, le terminal (2) et le serveur (21) étant attachés à un réseau de communications (100), mis en œuvre dans ledit terminal (2) et comprenant
- une étape (E9) d'émission à destination du serveur (21) d'un message (M9, M19) d'identification destiné à recevoir des identifiants d'entités (11, 13, 14, 16) de la pluralité ajoutés par les entités (11, 13, 14, 16),
- une étape (E'11) de réception en provenance du serveur (21) d'un message (M11, M21) d'acquittement comprenant des identifiants compris dans le message (M9) d'identification,
- une étape (E12) de sélection d'au moins un identifiant parmi ceux reçus du serveur (21),
- une étape (E13) d'émission à destination du serveur (21) d'un message (M13, M23) relatif à l'activation d'entités (11, 14) parmi la pluralité (11, 13, 14, 16).

2. Procédé d'activation, selon la revendication 1, où le message (M11, M21) d'acquittement comprend des identifiants d'entités (11, 13, 14) de la pluralité agréées par le fournisseur.

3. Procédé d'activation, selon la revendication 1, où le message (M13, M23) relatif à l'activation comprend une information pour désactiver des entités dont les identifiants ne sont pas sélectionnés par le terminal (2).

4. Procédé d'activation, selon la revendication 1, où le message relatif à l'activation comprend une information pour activer des entités dont les identifiants sont sélectionnés par le terminal (2).

5. Procédé d'activation, selon la revendication 1, où le message (M9, M19) d'identification et le message (M13, M23) relatif à l'activation sont des messages relatifs au protocole QUIC.

6. Procédé d'activation, selon la revendication 1, où le message (M9, M19) d'identification et le message (M13, M23) relatif à l'activation comprennent en outre un identifiant de session.

7. Procédé d'acquittement d'identification d'au moins une entité (11, 13, 14, 16) de traitement parmi une pluralité d'entités (11, 13, 14, 16) se situant sur le chemin des données d'une session entre un terminal (2) d'un utilisateur et un serveur (21) d'un fournisseur de services, le terminal (2) et le serveur (21) étant attachés à un réseau (100) de communications, mis en œuvre dans ledit serveur et comprenant
- une étape (E'9) de réception en provenance du terminal (2) d'un message (M9, M19) d'identification comprenant des identifiants d'entités de la pluralité ajoutés par ces entités (11, 13, 14, 16),
- une étape (E11) d'émission à destination du terminal d'un message (M11, M21) d'acquittement comprenant des identifiants compris dans le message (M9, M19) d'identification,
- une étape (E'13) de réception en provenance du terminal (2) d'un message (M13, M23) relatif à l'activation d'entités (11, 14) parmi la pluralité (11, 13, 14, 16).

8. Procédé d'acquittement, selon la revendication 7, comprenant en outre une étape (E10) de sélection des identifiants des entités (11, 13, 14) agréées par le fournisseur parmi les identifiants reçus dans le message d'identification.

9. Procédé d'acquittement, selon la revendication 7, comprenant en outre
- une étape (E1, E3, E5) d'émission d'un message (M1, M3, M5) de demande d'agrément à destination d'au moins une entité de la pluralité (11, 13, 14),
- une étape de réception (E'2, E'4, E'6) d'un message de réponse d'agrément, en provenance de l'au moins une entité (11, 13, 14), comprenant la clé publique de l'entité (11, 13, 14).

10. Dispositif (60) d'activation d'au moins une entité (11, 14) de traitement parmi une pluralité (11, 13, 14, 16) d'entités se situant sur le chemin des données d'une session entre un terminal (2) d'un utilisateur et un serveur (21) d'un fournisseur de services, le terminal (2) et le serveur (21) étant attachés à un réseau (100) de communications, mis en œuvre dans ledit terminal (2) et comprenant
- un émetteur (63), apte à émettre à destination du serveur (21) un message (M9, M19) d'identification destiné à recevoir des identifiants d'entités (11, 13, 14, 16) de la pluralité ajoutés par les entités (11, 13, 14, 16),
- un récepteur (64), apte à recevoir en provenance du serveur (21) un message (M11, M21) d'acquittement comprenant des identifiants compris dans le message (M9, M19) d'identification,
- un module (61) de sélection, apte à sélectionner au moins un identifiant parmi ceux reçus du serveur (21),
- l'émetteur (63), également apte à émettre à destination du serveur (21) un message (M13, M23) relatif à l'activation d'entités parmi la pluralité.

11. Dispositif (70) d'acquittement d'identification d'au moins une entité (11, 14) de traitement parmi une pluralité (11, 13, 14, 16) d'entités se situant sur le chemin des données d'une session entre un terminal (2) d'un utilisateur et un serveur (21) d'un fournisseur de services, le terminal (2) et le serveur (21) étant attachés à un réseau (100) de communications, mis en œuvre dans ledit serveur et comprenant
- un récepteur (74), apte à recevoir en provenance du terminal (2) un message (M9, M19) d'identification comprenant des identifiants d'entités (11, 13, 14, 16) de la pluralité ajoutés par ces entités (11, 13, 14, 16),
- un émetteur (73), apte à émettre à destination du terminal (2) un message (M11, M21) d'acquittement comprenant des identifiants compris dans le message d'identification,
- le récepteur (74), étant également apte à recevoir un message (M13, M23) relatif à l'activation d'entités (11, 14) parmi la pluralité (11, 13, 14, 16).

12. Dispositif (70) d'acquittement, selon la revendication 11, comprenant en outre un module (71) de sélection, apte à sélectionner des identifiants des entités (11, 13, 14) agréées par le fournisseur parmi les identifiants reçus dans le message (M9, M19) d'identification.

13. Système d'activation d'au moins une fonction intermédiaire comprenant
- Un terminal (2) comprenant un dispositif (60) d'activation selon la revendication 10,
- Un serveur (21) comprenant un dispositif (70) d'acquittement selon la revendication 11.
- Au moins une entité de traitement (11, 13, 14, 16)
- apte à ajouter un identifiant au message (M9, M19) d'identification reçu en provenance du terminal (2),
- apte à activer un traitement relatif au message (M13) relatif à l'activation.

14. Programme d'ordinateur, **caractérisé en ce qu'**il comprend des instructions pour la mise en œuvre des étapes du procédé d'activation selon la revendication 1, lorsque ce procédé est exécuté par un processeur.

15. Support d'enregistrement lisible par un dispositif d'activation conforme à la revendication 10 sur lequel est enregistré le programme selon la revendication 14.

## Patentansprüche

1. Verfahren zur Aktivierung mindestens einer Prozessentität (11, 14) aus einer Vielzahl von Entitäten (11, 13, 14, 16), die sich auf dem Pfad der Daten einer Sitzung zwischen einem Endgerät (2) eines Benutzers und einem Server (21) eines Dienstanbieters befinden, wobei das Endgerät (2) und der Server (21) in ein Kommunikationsnetzwerk (100) eingebunden sind, implementiert in dem Endgerät (2) und beinhaltend
- einen Schritt (E9) des Sendens, an den Server (21), einer Identifikationsnachricht (M9, M19), die dazu bestimmt ist, Kennungen von Entitäten (11, 13, 14, 16) der Vielzahl zu empfangen, die durch die Entitäten (11, 13, 14, 16) hinzugefügt werden,
- einen Schritt (E'11) des Empfangens, von dem Server (21), einer Bestätigungsnachricht (M11, M21), die in der Identifikationsnachricht (M9) enthaltene Kennungen beinhaltet,
- einen Schritt (E12) des Auswählens mindestens einer Kennung aus den von dem Server (21) empfangenen Kennungen,
- einen Schritt (E13) des Sendens, an den Server (21), einer Nachricht (M13, M23) über die Aktivierung von Entitäten (11, 14) aus der Vielzahl (11, 13, 14, 16).

2. Aktivierungsverfahren nach Anspruch 1, wobei die Bestätigungsnachricht (M11, M21) Kennungen von durch den Anbieter zugelassenen Entitäten (11, 13, 14) der Vielzahl beinhaltet.

3. Aktivierungsverfahren nach Anspruch 1, wobei die Nachricht (M13, M23) über die Aktivierung eine Information beinhaltet, um Entitäten, deren Kennungen nicht durch das Endgerät (2) ausgewählt werden, zu deaktivieren.

4. Aktivierungsverfahren nach Anspruch 1, wobei die Nachricht über die Aktivierung eine Information beinhaltet, um Entitäten, deren Kennungen durch das Endgerät (2) ausgewählt werden, zu aktivieren.

5. Aktivierungsverfahren nach Anspruch 1, wobei die Identifikationsnachricht (M9, M19) und die Nachricht (M13, M23) über die Aktivierung Nachrichten auf Basis des QUIC-Protokolls sind.

6. Aktivierungsverfahren nach Anspruch 1, wobei die Identifikationsnachricht (M9, M19) und die Nachricht (M13, M23) über die Aktivierung ferner eine Sitzungskennung beinhalten.

7. Verfahren zur Bestätigung der Identifikation mindestens einer Prozessentität (11, 13, 14, 16) aus einer Vielzahl von Entitäten (11, 13, 14, 16), die sich auf dem Pfad der Daten einer Sitzung zwischen einem Endgerät (2) eines Benutzers und einem Server (21) eines Dienstanbieters befinden, wobei das Endgerät (2) und der Server (21) in ein Kommunikationsnetzwerk (100) eingebunden sind, implementiert in dem Server und beinhaltend
- einen Schritt (E'9) des Empfangens, von dem Endgerät (2), einer Identifikationsnachricht (M9, M19), die Kennungen von Entitäten der Vielzahl, die durch diese Entitäten (11, 13, 14, 16) hinzugefügt werden, beinhaltet,
- einen Schritt (E11) des Sendens, an das Endgerät, einer Bestätigungsnachricht (M11, M21), die in der Identifikationsnachricht (M9, M19) enthaltene Kennungen beinhaltet,
- einen Schritt (E'13) des Empfangens, von dem Endgerät (2), einer Nachricht (M13, M23) über die Aktivierung von Entitäten (11, 14) aus der Vielzahl (11, 13, 14, 16).

8. Bestätigungsverfahren nach Anspruch 7, das ferner einen Schritt (E10) des Auswählens der Kennungen der durch den Anbieter zugelassenen Entitäten (11, 13, 14) aus den in der Identifikationsnachricht empfangenen Kennungen beinhaltet.

9. Bestätigungsverfahren nach Anspruch 7, ferner beinhaltend
- einen Schritt (E1, E3, E5) des Sendens einer Zulassungsanfragenachricht (M1, M3, M5) an mindestens eine Entität der Vielzahl (11, 13, 14),
- einen Schritt des Empfangens (E'2, E'4, E'6) einer Zulassungsantwortnachricht von der mindestens einen Entität (11, 13, 14), die den öffentlichen Schlüssel der Entität (11, 13, 14) beinhaltet.

10. Vorrichtung (60) zur Aktivierung mindestens einer Prozessentität (11, 14) aus einer Vielzahl (11, 13, 14, 16) von Entitäten, die sich auf dem Pfad der Daten einer Sitzung zwischen einem Endgerät (2) eines Benutzers und einem Server (21) eines Dienstanbieters befinden, wobei das Endgerät (2) und der Server (21) in ein Kommunikationsnetzwerk (100) eingebunden sind, implementiert in dem Endgerät (2) und beinhaltend
- einen Sender (63), der fähig ist, eine Identifikationsnachricht (M9, M19) an den Server (21) zu senden, welche dazu bestimmt ist, Kennungen von Entitäten (11, 13, 14, 16) der Vielzahl zu empfangen, die durch die Entitäten (11, 13, 14, 16) hinzugefügt werden,
- einen Empfänger (64), der fähig ist, eine Bestätigungsnachricht (M11, M21) von dem Server (21) zu empfangen, die in der Identifikationsnachricht (M9, M19) enthaltene Kennungen beinhaltet,
- ein Auswahlmodul (61), das fähig ist, mindestens eine Kennung aus den von dem Server (21) empfangenen Kennungen auszuwählen,
- den Sender (63), der zusätzlich fähig ist, eine Nachricht (M13, M23) über die Aktivierung von Entitäten aus der Vielzahl an den Server (21) zu senden.

11. Vorrichtung (70) zur Bestätigung der Identifikation mindestens einer Prozessentität (11, 14) aus einer Vielzahl (11, 13, 14, 16) von Entitäten, die sich auf dem Pfad der Daten einer Sitzung zwischen einem Endgerät (2) eines Benutzers und einem Server (21) eines Dienstanbieters befinden, wobei das Endgerät (2) und der Server (21) in ein Kommunikationsnetzwerk (100) eingebunden sind, implementiert in dem Server und beinhaltend
- einen Empfänger (74), der fähig ist, eine Identifikationsnachricht (M9, M19) von dem Endgerät (2) zu empfangen, die Kennungen von Entitäten (11, 13, 14, 16) der Vielzahl, die durch diese Entitäten (11, 13, 14, 16) hinzugefügt werden, beinhaltet,
- einen Sender (73), der fähig ist, eine Bestätigungsnachricht (M11, M21) an das Endgerät (2) zu senden, die in der Identifikationsnachricht enthaltene Kennungen beinhaltet,
- den Empfänger (74), der zusätzlich fähig ist, eine Nachricht (M13, M23) über die Aktivierung von Entitäten (11, 14) aus der Vielzahl (11, 13, 14, 16) zu empfangen.

12. Bestätigungsvorrichtung (70) nach Anspruch 11, die ferner ein Auswahlmodul (71) beinhaltet, das fähig ist, Kennungen der durch den Anbieter zugelassenen Entitäten (11, 13, 14) aus den in der Identifikationsnachricht (M9, M19) empfangenen Kennungen auszuwählen.

13. System zur Aktivierung mindestens einer Zwischenfunktion, beinhaltend
- ein Endgerät (2), das eine Aktivierungsvorrichtung (60) nach Anspruch 10 beinhaltet,
- einen Server (21), der eine Bestätigungsvorrichtung (70) nach Anspruch 11 beinhaltet.
- Mindestens eine Prozessentität (11, 13, 14, 16),
- die fähig ist, der von dem Endgerät (2) empfangenen Identifikationsnachricht (M9, M19) eine Kennung hinzuzufügen,
- die fähig ist, in Bezug auf die Nachricht (M13) über die Aktivierung einen Prozess zu aktivieren.

14. Computerprogramm, **dadurch gekennzeichnet, dass** es Anweisungen zum Implementieren der Schritte des Aktivierungsverfahrens nach Anspruch 1 beinhaltet, wenn dieses Verfahren von einem Prozessor ausgeführt wird.

15. Durch eine Aktivierungsvorrichtung nach Anspruch 10 lesbares Aufzeichnungsmedium, auf dem das Programm nach Anspruch 14 aufgezeichnet ist.

## Claims

1. Method for activating at least one processing entity (11, 14) from among a plurality of entities (11, 13, 14, 16) situated on the path of the data of a session between a terminal (2) of a user and a server (21) of a services provider, the terminal (2) and the server (21) being attached to a communication network (100), implemented in said terminal (2) and comprising
- a step (E9) of transmission to the server (21) of an identification message (M9, M19) intended to receive identifiers of entities (11, 13, 14, 16) of the plurality added by the entities (11, 13, 14, 16),
- a step (E'11) of reception from the server (21) of an acknowledgement message (M11, M21) comprising identifiers included in the identification message (M9),
- a step (E12) of selection of at least one identifier from among those received from the server (21),
- a step (E13) of transmission to the server (21) of a message (M13, M23) relating to the activation of entities (11, 14) from among the plurality (11, 13, 14, 16).

2. Activation method, according to Claim 1, in which the acknowledgement message (M11, M21) comprises identifiers of entities (11, 13, 14) of the plurality approved by the provider.

3. Activation method, according to Claim 1, in which the message (M13, M23) relating to the activation comprises information for deactivating entities whose identifiers are not selected by the terminal (2).

4. Activation method, according to Claim 1, in which the message relating to the activation comprises information for activating entities whose identifiers are selected by the terminal (2).

5. Activation method, according to Claim 1, in which the identification message (M9, M19) and the message (M13, M23) relating to the activation are messages relating to the QUIC protocol.

6. Activation method, according to Claim 1, in which the identification message (M9, M19) and the message (M13, M23) relating to the activation also comprise a session identifier.

7. Method for acknowledging identification of at least one processing entity (11, 13, 14, 16) from among a plurality of entities (11, 13, 14, 16) situated on the path of the data of a session between a terminal (2) of a user and a server (21) of a services provider, the terminal (2) and the server (21) being attached to a communication network (100), implemented in said server and comprising
- a step (E'9) of reception from the terminal (2) of an identification message (M9, M19) comprising identifiers of entities of the plurality added by these entities (11, 13, 14, 16),
- a step (E11) of transmission to the terminal of an acknowledgement message (M11, M21) comprising identifiers included in the identification message (M9, M19),
- a step (E'13) of reception from the terminal (2) of a message (M13, M23) relating to the activation of entities (11, 14) from among the plurality (11, 13, 14, 16).

8. Acknowledgement method, according to Claim 7, further comprising a step (E10) of selection of the identifiers of the entities (11, 13, 14) approved by the provider from among the identifiers received in the identification message.

9. Acknowledgment method, according to Claim 7, further comprising
- a step (E1, E3, E5) of transmission of an approval request message (M1, M3, M5) to at least one entity of the plurality (11, 13, 14),
- a step of reception (E'2, E'4, E'6) of an approval response message, from the at least one entity (11, 13, 14), comprising the public key of the entity (11, 13, 14).

10. Device (60) for activating at least one processing entity (11, 14) from among a plurality (11, 13, 14, 16) of entities situated on the path of the data of a session between a terminal (2) of a user and a server (21) of a services provider, the terminal (2) and the server (21) being attached to a communication network (100), implemented in said terminal (2) and comprising
- a transmitter (63), capable of transmitting to the server (21) an identification message (M9, M19) intended to receive identifiers of entities (11, 13, 14, 16) of the plurality added by the entities (11, 13, 14, 16),
- a receiver (64), capable of receiving from the server (21) an acknowledgement message (M11, M21) comprising identifiers included in the identification message (M9, M19),
- a selection module (61), capable of selecting at least one identifier from among those received from the server (21),
- the transmitter (63), also capable of transmitting to the server (21) a message (M13, M23) relating to the activation of entities from among the plurality.

11. Device (70) for acknowledging identification of at least one processing entity (11, 14) from among a plurality (11, 13, 14, 16) of entities situated on the path of the data of a session between a terminal (2) of a user and a server (21) of a services provider, the terminal (2) and the server (21) being attached to a communication network (100), implemented in said server and comprising
- a receiver (74), capable of receiving from the terminal (2) an identification message (M9, M19) comprising identifiers of entities (11, 13, 14, 16) of the plurality added by these entities (11, 13, 14, 16),
- a transmitter (73), capable of transmitting to the terminal (2) an acknowledgement message (M11, M21) comprising identifiers included in the identification message,
- the receiver (74), being also capable of receiving a message (M13, M23) relating to the activation of entities (11, 14) from among the plurality (11, 13, 14, 16).

12. Acknowledgement device (70), according to Claim 11, further comprising a selection module (71), capable of selecting identifiers of the entities (11, 13, 14) approved by the provider from among the identifiers received in the identification message (M9, M19).

13. System for activating at least one intermediate function, comprising
- a terminal (2) comprising an activation device (60) according to Claim 10,
- a server (21) comprising an acknowledgement device (70) according to Claim 11,
- at least one processing entity (11, 13, 14, 16)
- capable of adding an identifier to the identification message (M9, M19) received from the terminal (2),
- capable of activating a process relating to the message (M13) relating to the activation.

14. Computer program, **characterized in that** it comprises instructions for the implementation of the steps of the activation method according to Claim 1, when this method is executed by a processor.

15. Storage medium that can be read by an activation device conforming to Claim 10, on which is stored the program according to Claim 14.
